# EUROPEAN PATENT APPLICATION

(11) **EP 3 506 199 A1**
(43) Date of publication of application: **03.07.2019**
(21) Application number: 17210919.1
(22) Date of filing: 28.12.2017
(51) Int. Cl.: G06T 5/00

(54) **METHOD FOR ENHANCING VISUAL QUALITY OF VIDEOS**

(71) Applicant: Vestel Elektronik Sanayi ve Ticaret A.S., 45030 Manisa (TR)
(72) Inventor: KIRGIZ, Gamze, 45030 Manisa (TR); IKIZLER, Anil, 45030 Manisa (TR); EREN, Sibel, 45030 Manisa (TR)
(74) Representative: Ascherl, Andreas

(57) **Abstract**

The present invention refers to a method for enhancing visual quality of a received video (1), which is achieved by applying selective noise reduction algorithm based on the source resolution (8) of the received video (1). The method comprising the steps of reading contents (2b) of the received video (1) including the source resolution and in case that no source resolution is readable then detecting a motion amount of the received video (1) by comparing the frames of the received video (1), finding a source video resolution by comparing the content of the received video (1) depending on the motion amount between the frames detected from the received video (1), and applying a noise reduction algorithm on the received video (1) based on the native video resolution.

## Description

This invention refers to a method for enhancing visual quality of a received video according to claim 1. More specifically, the invention provides a method for enhancing visual quality of a received video by applying noise reduction algorithm based on resolution of the source video.

### Background of the Invention

On displays, generally to increase the visual quality of a received video, noise reduction algorithms can be applied at the receiving end. In conventional methods, the noise reduction algorithms on the displays are not adjusted based on the received video. Actually, the noise reduction strength values have to be changed according to the resolution for obtaining a high qualified image. For example, for SD contents that have a low resolution, the noise reduction algorithm strength should be high for compressing high frequency parts of content, since SD content high frequency parts generally contain noise but not detail of the video. For UHD contents that have a quite high resolution, the noise reduction algorithm strength should be high for preserving high frequency parts of content, since UHD content high frequency parts generally contain details of the video.

However, the scaling process on contents becomes a problem for the image quality in terms of noise reduction, since the resolution of content is a relevant information for noise reduction algorithm success. The resolution data can be changed by up-scaling or down-scaling the received video content.

Prior art US20110019096A1 discloses a method and system for detection and enhancement of video images. A method and a system for adaptive image enhancement are provided for measuring the image quality of a pixel region in a frame, performing an image classification based on the image quality measurement, and enhancing image quality by applying operations according to image classification of the region. Also provided is a method as above including the steps of dividing a frame into P pixel regions; and for each one of the pixel regions measuring the image quality; assigning an image quality class; and enhancing the image. Also provided is a system for adaptive image enhancement including a circuit to measure the image quality of a pixel region in a frame in a source video image; a circuit to perform an image classification of the region based on the image quality measurement; and a circuit to enhance the image quality of the region in the source video image a by applying operations based on the image classification of the frame. The prior art discloses a luminance histogram and spectral histogram for measuring video quality while this method using motion amount, bit rate, codec type and fps information for detecting source resolution. The scaling process required before implementing the noise reduction algorithm is not identified and also the application of scaling process on to the received video based on the resolution of the video is also not identified for better visual quality.

### Object of the Invention

It is therefore the object of the present invention to provide a method that enhances the visual quality of the received video by effectively applying the noise reduction algorithm compared to the known methods.

### Description of the Invention

The before mentioned object is solved by a method for enhancing visual quality of a received video by employing a system comprising at least one processor configured to execute computer program instructions for performing the method according to claim 1.

According to the invention, the method for enhancing visual quality of a received video by employing a system comprises at least one processor configured to execute computer program instructions for performing the method. The method comprises the steps of reading contents of the received video, detecting a motion amount of the received video by comparing the frames of the received video, finding a source video resolution by comparing the contents of the received video with the motion amount detected from the received video, and applying a noise reduction algorithm on the received video based on the source resolution. According to the invention the method comprises receiving video data, reading content of the received video including the native resolution or in case that the content does not include the native resolution in a readable manner, detecting a motion amount of the received video by comparing the frames of the received video, detecting a source video resolution by comparing the content of the received video when no motion amount is detected between frames, and applying a noise reduction algorithm on the received video based on the source video resolution.

This solution is beneficial since such method can be applicable for all the devices that have display and processing unit like televisions and cell phones. It can improve image quality in terms of by selective application of noise reduction algorithm based on the resolution of the received video.

Further preferred embodiments are subject-matter of dependent claims and/or of the following specification parts.

According to a preferred embodiment of the present invention, the method of the noise reduction algorithm on the received video comprises the step of comparing the frames of the received video and comparing the content of the received video when no motion amount between the frames is detected from the received video, wherein the source video resolution detects the native resolution of the received video data using a codec database which in particular uses frames per second (fps) and bit rate.

According to a further preferred embodiment of the present invention, the method of the noise reduction algorithm on the received video further comprises the step of checking whether the resolution of the received video is greater than the source video resolution and proceeding application of the noise reduction algorithm based on the source video resolution, when the resolution of the received video is greater than the source video resolution, particularly when the received video is up-scaled, and using the corresponding noise reduction algorithm based on the source resolution.

According to another embodiment of the present invention, the method of the noise reduction algorithm on the received video further comprises the step of checking whether the resolution of the received video is lesser than the source video resolution, and proceeding application of the noise reduction algorithm based on the source video resolution, when the resolution of the received video is lesser than the source video resolution, particularly when the received video is down-scaled, and using the corresponding noise reduction algorithm based on the source resolution.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawing

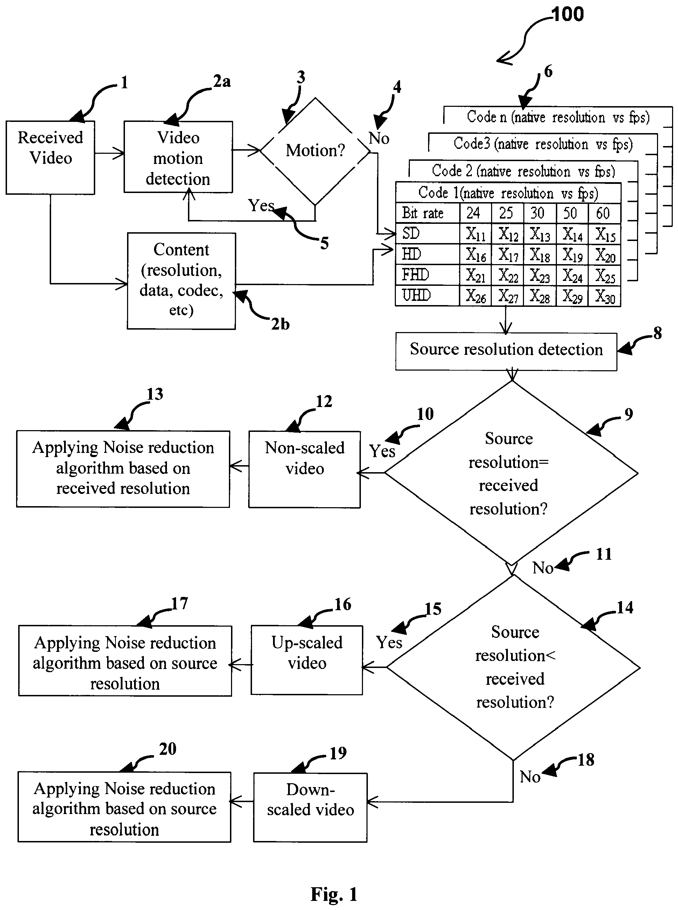

Fig. 1 illustrates a method for enhancing visual quality of a received video, according to the present invention.

### Detailed Description of the Drawing

Fig. 1 illustrates a method 100 for enhancing visual quality of a received video, according to the present invention. This method for enhancing visual quality of a received video 1 by employing a system comprises at least one processor configured to execute computer program instructions for performing the method. The method comprising the steps of reading contents 2b of the received video 1 including the source resolution and in case that no source resolution is readable then detecting a motion amount of the received video 1 by comparing the frames of the received video 1, finding a source video resolution by comparing the content of the received video 1 when no motion amount between the frames is detected from the received video 1, and applying a noise reduction algorithm on the received video 1 based on the source video resolution. The contents 2b of the received video can be in a container, which includes resolution data, bit rate, codec type and frames per second information

The content of the received video 1 is read and transferred to a codec database 6 for comparing the contents 2b of the received video 1. The video motion detection 2a can compute the motion amount from the received video 1 by comparing frames of the received video 1. When the frame comparison 3 is not showing any change then the motion amount is transferred to the codec database 6 for comparing the motion amount with the contents of the received video 1. If there is any change found in the frames then the video motion detection 2a can increase/add count of the motion amount. A source video resolution detection 8, this can also be referred as 'source resolution', is detected and achieved by comparing the contents of the received video 1 with the motion amount in the codec database 6. The codec database 6 can be a lookup table and can include but is not limited to frames per second (fps), bit rate and similar details for characterizing the source or native resolution of the video. For example for Codec 1, bitrate X13 and frame rate of 30, the native resolution would be determined to be SD (Standard Definition). In the present invention, the motion existence and the motion amount are checked in the received video and the method of the invention turns to video motion detection 14 until there is preferably no motion between related frames. The bit rate changes according to the motion existence and the motion amount and if there is motion, it is hard to evaluate the bit rate against the resolution relation. Thus, the method of the invention checks the motion existence and the motion amount, but works at a situation where no motion is.

After obtaining the detected source resolution 8 of the received video 1 the appropriate scaling process is identified and the noise reduction algorithm is implemented accordingly.

This solution is beneficial since such method can be applicable for all the devices that have display and processing unit like televisions and cell phones. It can improve image quality in terms of by selective application of noise reduction algorithm based on the resolution of the received video 1.

According to a further embodiment of the present invention, the method of the noise reduction algorithm on the received video 1 comprises the step of checking whether the resolution of the received video 1 is equal to (step 9) the source resolution 8 and proceeding application 13 of the noise reduction algorithm based on the resolution of the received video 1, when the resolution of the received video 1 is equal to (step 10) the source resolution 8, particularly the received video 1 is non-scaled (step 12). For example, if the source resolution 8 is equal to (step 10) the resolution of the received video 1, then there may not be any scaling process performed for that received video 1. Further, the noise reduction algorithm applied 13 is based on the resolution of the received video 1.

According to another embodiment of the present invention, the application of the noise reduction algorithm on the received video 1 further comprises the step, if the source resolution is not equal to (step 11) the resolution of the received video, then it is checked whether the resolution of the received video 1 is greater (step 14) than the source resolution 8 and proceeding application (step 17) of the noise reduction algorithm based on the source resolution 8, when the resolution of received video 1 is greater (step 14) than the source resolution 8, particularly, the received video 1 is up-scaled (step 16). For example, if the resolution of the received video 1 is greater than the detected source resolution 8, then the received video 1 is up-scaled. Further, the noise reduction algorithm is applied based on the detected source resolution 8.

The method can implement the noise reduction for the scaled video based on the source resolution 8 instead of simply applying the content provided for the received video 1. For example, even if resolution data is UHD on content info of the received video 1, and if the detected source resolution 8 of the received video (1) is detected as SD, then the noise reduction algorithm is applied according to the SD resolution. Therefore, noise level is decreased on up-scaled video by high strength.

According to a further embodiment of the present invention, the application of the noise reduction algorithm on the received video 1 further comprises the step of checking whether the resolution of the received video 1 is lesser (step 18) than the source resolution 8, and proceeding application (step 20) of the noise reduction algorithm based on the detected source resolution 8, when the resolution of received video 1 is lesser (step 18) than the source resolution 8, particularly, the received video 1 is identified as down-scaled (step 19) video. For example, if the resolution of the received video 1 is lesser (step 18) than the source resolution 8, then the received video 1 is down-scaled. Further, the noise reduction algorithm is applied based on the source resolution 8.

Exemplary methods for enhancing visual quality of a received video 1 are described with reference to Fig 1. These exemplary methods can be described in the general context of computer executable instructions. Generally, computer executable instructions can include routines, programs, objects, components, data structures, procedures, modules, functions, and the like that perform particular functions or implement particular abstract data types. The methods can also be practiced in a distributed computing environment where functions are performed by remote processing devices that are linked through a communication network. In a distributed computing environment, computer executable instructions may be located both in local and remote computer storage media, including memory storage devices.

The exemplary methods are illustrated as a collection of operations in a logical flow graph representing a sequence of operations that can be implemented in hardware, software, firmware, or a combination thereof. The order in which the methods are described is not intended to be construed as a limitation, and any number of the described method blocks can be combined in any order to implement the methods, or alternate methods. Additionally, individual operations may be deleted from the methods without departing from the spirit and scope of the subject matter described herein. In the context of software, the operations represent computer instructions that, when executed by one or more processors, perform the recited operations.

According to the invention, the method for enhancing visual quality of a received video (1) comprises the steps of:
step 1: receiving the video from the source;
step 2a: detecting the motion amount from the received video;
step 2b: reading content of the received video;
step 3: checking whether motion is present in the received video;
step 4: if motion is not present in the frames comparison, then comparing the contents (2b) of the received video (1) with the motion amount detected (2a) from the received video (1) to identify the source resolution (8);
step 5: if the motion is present in the frames comparison, then again detect the motion amount in the received video by frame comparison;
step 6: comparing the contents (2b) of the received video (1) with the motion amount detected (2a) from the received video (1) to identify the source resolution (8) in the codec database;
step 8: detecting the source resolution (8);
step 9: checking whether the source resolution is equal to resolution of the received video;
step 10: if the source resolution is equal to resolution of the received video then the scaling of the received video is null;
step 11: identifying the received video as a non-scaled video;
step12: applying noise reduction algorithm based on the resolution of the received video for the non scaled video;
step 13: if the source resolution is not equal to the resolution of the received video, then check the other condition for identifying the scaling of the received video;
step 14: checking whether the resolution of the received video is greater than the source resolution;
step 15: if the resolution of the received video is greater than the source resolution then identify the scaling off the video;
step 16: identifying the received video as an up-scaled video;
Step17: applying noise reduction algorithm based on the source resolution for the up-scaled video;
Step 18: if the resolution of the received video is not greater than the source resolution of the received video, then identify the scaling of the received video;
Step 19: identifying the received video as a down-scaled video; and
Step 20: applying noise reduction algorithm based on the source resolution for the down-scaled video.

Thus, the method of the invention for enhancing visual quality of a received video 1 is achieved by applying selective noise reduction algorithm based on the source resolution 8 of the received video 1. The method comprising the steps of reading contents 2b of the received video 1 including the source resolution and in case that no source resolution is readable then detecting a motion amount of the received video 1 by comparing the frames of the received video 1, finding a source video resolution by comparing the content of the received video 1 depending on the motion amount between the frames detected from the received video 1, and applying a noise reduction algorithm on the received video 1 based on the native or source video resolution. The video container info can have content 2b, which includes resolution data, bit rate, codec type and frames per second information.

### List of reference numbers

- 1: received video
- 2a: video motion detection
- 3: is motion present in the video or motion?
- 4: motion is not present in the frames comparison
- 5: yes, motion is present in the frames comparison
- 6: codec database
- 2b: reading content information or content
- 8: source resolution detection
- 9: checking source resolution is equal to resolution of the received video
- 10: yes, source resolution is equal to resolution of the received video
- 11: source resolution is not equal to resolution of the received video
- 12: non-scaled video
- 13: applying noise reduction algorithm based on the resolution of the received video
- 14: checking resolution of the received video is greater than the source resolution
- 15: yes, resolution of the received video is greater than the source resolution
- 16: up-scaled video
- 17: applying noise reduction algorithm based on the source resolution
- 18: resolution of the received video is not greater (lesser) than the source resolution
- 19: down-scaled video
- 20: applying noise reduction algorithm based on the source resolution

## Claims

1. A method for enhancing visual quality of a received video (1) by employing a system comprising at least one processor configured to execute computer program instructions for performing the method, wherein the method comprises the steps of:
receiving video data,
reading content (2b) of the received video (1) including the native resolution
or
in case that the content of the received video does not include the native resolution in a readable manner, then
detecting (2a) a motion amount of the received video (1) by comparing the frames of the received video (1),
detecting a source video resolution (8) by comparing the content of the received video (1) depending on the motion amount between the frames; and
applying a noise reduction algorithm on the received video (1) based on the source video resolution (8).

2. The method as claimed in claim 1, wherein the application of the noise reduction algorithm on the received video (1) comprising the step of,
comparing the frames of the received video 1 and comparing the content of the received video (1) when no motion amount between the frames is detected from the received video (1), wherein the source video resolution (8) detects the native resolution of the received video data using a codec database (6) which in particular uses frames per second (fps) and bit rate.

3. The method as claimed in claim 1, wherein the application of the noise reduction algorithm on the received video (1) further comprising the step of,
checking whether the resolution of the received video (1) is greater than the source resolution (8); and
proceeding application of the noise reduction algorithm based on the source video resolution (8), when the resolution of received video (1) is greater than the source video resolution (8); wherein the received video (1) is identified as an up-scaled video (16) and
using a corresponding noise reduction algorithm based on the source resolution (8).

4. The method as claimed in claim 1, wherein the application of the noise reduction algorithm on the received video (1) further comprising the step of,
checking (18) whether the resolution of the received video (1) is lesser than the source video resolution (8); and
proceeding application (20) of the noise reduction algorithm based on the source video resolution (8), when the resolution of received video (1) is lesser than the source video resolution (8); wherein the received video (1) is identified as a down-scaled video (16) and
using another corresponding noise reduction algorithm based on the source resolution (8).

5. The method as claimed in claim 1, wherein the content (2b) of the received video is in a container, which includes resolution data, bit rate, codec type and frames per second information.
